# FASCICULE DE BREVET EUROPEEN

(11) **EP 0 901 445 B1**
(45) Date de publication et mention de la délivrance du brevet: **28.03.2001**
(21) Numéro de dépôt: 97926079.1
(22) Date de dépôt: 03.06.1997
(51) Int. Cl.: B62D 65/00, B25B 27/30

(54) **COMPRESSEUR HYDRAULIQUE DE RESSORT**
HYDRAULISCHER FEDERSPANNER
HYDRAULIC SPRING COMPRESSOR

(30) Priorité: 03.06.1996 FR 9606805
(43) Date de publication de la demande: 17.03.1999
(73) Titulaire: MECANIQUE ENERGETIQUE, F-77620 Egreville (FR)
(72) Inventeur: LAMBERT, Patrick, F-45320 Courtenay (FR)
(74) Mandataire: Robert, Jean-Pierre
(86) Numéro de dépôt international: FR9700963
(87) Numéro de publication internationale: WO9746442

(56) Documents cités:
- EP-A- 0 398 815
- US-A- 4 034 960
- US-A- 4 105 188
- US-A- 5 564 172

## Description

Dans le domaine du montage et du démontage des ressorts d'amortisseurs de véhicules automobiles, on utilise des mécanismes moteur en forme de vérins qui écartent ou rapprochent deux mâchoires ou coupelles placées l'une en face de l'autre et entre lesquelles quelques spires du ressort sont en prise.

Dans la plupart des cas, le vérin utilisé est un vérin à vis et le corps peut être en deux parties télescopiques. La partie de diamètre le plus important porte en son centre une vis immobilisée en translation par rapport à elle tandis que la partie de diamètre le moins important porte un écrou, cette partie étant calée en rotation par rapport à la partie de diamètre le plus important. En manipulant la vis par l'extrémité du corps du vérin, on commande donc l'extension ou la rétraction de ce corps, donc l'éloignement ou le rapprochement des coupelles qui y sont fixées.

Il existe également des vérins à fluide sous pression, simple ou double effet, qui assurent ce déplacement relatif. On citera en particulier le vérin décrit dans le document US-A-4,034,960. Dans ce document le compresseur de ressort comporte deux vérins côte à côte chacun ayant un piston fixe et un cylindre mobile, une coupelle étant solidaire du cylindre mobile de chaque vérin tandis qu'une autre coupelle est portée par une platine qui est fixe avec le piston et qui est solidaire d'un tube de guidage pour chacun des cylindres mobiles par rapport au piston. La présence de deux vérins côte à côte est nécessaire d'une part pour permettre le développement d'une force de compression suffisante, le dispositif étant pneumatique, et d'autre part pour assurer un guidage rectiligne de la coupelle mobile par rapport à la coupelle fixe afin de résister à la tendance qu'aurait le ressort de faire tourner une coupelle par rapport à l'autre. Enfin, les efforts mis en jeu sont tels que, pour résister au flambement, le cylindre de chaque vérin pneumatique, doit rester très largement à l'intérieur du tube de guidage correspondant lorsque le dispositif est à son extension maximum. Il en résulte un encombrement axial de l'appareil important pour une course donnée. Toutes ces causes d'encombrement important font que cet appareil n'est pas adapté notamment aux interventions sous caisses de véhicules automobiles à l'occasion des changements ou les réparations d'amortisseurs.

La présente invention concerne un vérin à fluide sous pression, et notamment un vérin à fluide hydraulique, qui permet en utilisant une pression d'utilisation de l'ordre de quelques centaines de bars, de disposer d'un appareil de faible diamètre (de l'ordre de 60 mm). En outre, ce dispositif est conçu de manière à présenter l'encombrement longitudinal minimum pour une course de compression donnée.

A cet effet, l'invention a donc pour objet un compresseur hydraulique de ressort comportant un corps formé par une première pièce tubulaire fermée à l'une de ses extrémités par un fond dans lequel est implantée l'extrémité d'une tige creuse s'étendant axialement à l'intérieur de la première pièce tubulaire et dont l'autre extrémité est conformée en un piston, par une seconde pièce tubulaire avec une extrémité fermée par un fond traversé par la tige creuse et montée à coulissement étanche sur la tige et le piston, définissant entre eux une chambre à volume variable en communication permanente avec le volume intérieur de la tige creuse, la première pièce tubulaire comportant sur sa surface extérieure, à son extrémité opposée au fond, des moyens d'attachement portés pour une coupelle de compression, la seconde pièce tubulaire et que comportant sur sa surface extérieure, à son extrémité opposée à son fond, des moyens d'attachement pour une seconde coupelle de compression. Afin d'obtenir un encombrement minimal de ce dispositif, la tige creuse est d'une longueur supérieure à celle de la première pièces tubulaires de sorte que son extrémité en forme de piston est située au-delà des moyens d'attachement portés par la première pièce tubulaire, l'extrémité fermée de la seconde pièce tubulaire est située à l'extérieur des moyens d'attachement de la première pièce tubulaire lorsque la chambre à volume variable est à son volume minimal, un manchon de liaison est monté à coulissement entre la première et la seconde pièce tubulaire respectivement sur les surfaces interne et externe de celles-ci et, un ensemble de rainure et clavette est interposé entre la seconde pièce et le manchon pour guider leur coulissement respectif longitudinal et former des épaulements venant au contact l'un de l'autre pour entraîner axialement le manchon par la seconde pièce lorsque la chambre de volume variable a dépassé une dimension longitudinale déterminée.

Grâce à cette disposition, la pièce mobile du compresseur qui porte la coupelle mobile peut prendre une première position dans laquelle cette coupelle mobile est adjacente à la coupelle portée par le corps du compresseur, la pièce mobile à l'exception des moyens d'attachement étant alors complètement logée à l'intérieur de ce corps, et une deuxième position dans laquelle la coupelle mobile est écartée de la coupelle portée par le corps du compresseur, la pièce portant cette coupelle mobile étant complètement à l'extérieur du corps du compresseur. Dans cette position, le guidage mutuel des pièces télescopiques et la résistance au flambement du compresseur sont assurés par le manchon interposé entre la pièce mobile et le corps de celui-ci.

Pour en même temps éviter que les coupelles ne puissent tourner l'une par rapport à l'autre, le manchon ou la première pièce tubulaire comporte une rainure longitudinale dans laquelle est logé un doigt radial porté par la première pièce ou le manchon, respectivement.

Dans une réalisation particulière de l'invention, le fond de la seconde pièce tubulaire traversé par la tige est formé par un écrou vissé intérieurement à l'extrémité de cette seconde pièce et possédant une collerette d'appui sur une face d'extrémité de cette pièce dans laquelle débouche une rainure longitudinale formée sur la surface extérieure de la seconde pièce, ladite collerette constituant l'épaulement susdit d'entraînement d'une clavette portée fixe par le manchon et montée à coulissement dans la rainure.

D'autre caractéristiques et avantages de l'invention ressortiront de la description donnée ci-après d'un de ses modes de réalisation. Il sera fait référence aux dessins annexés parmi lesquels :

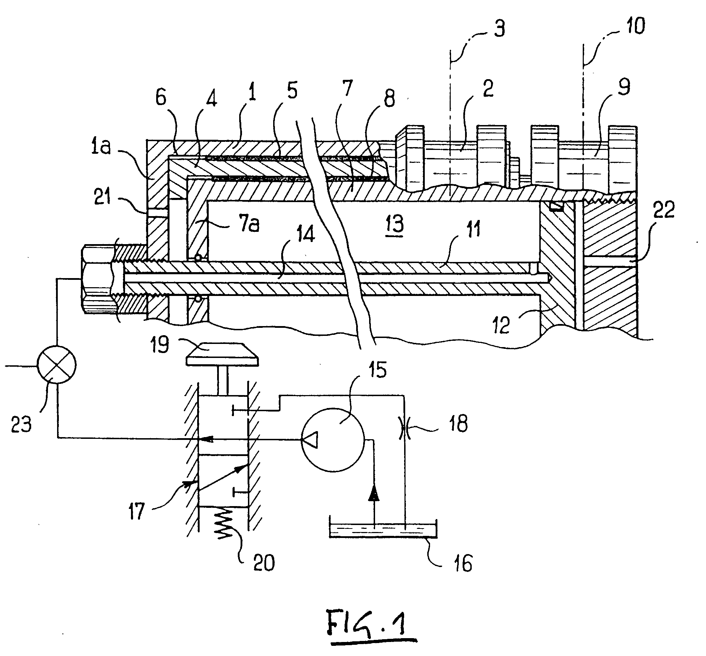

- la figure 1 est une figure schématique illustrant le principe de fonctionnement de l'invention,
- la figure 2 est une figure en coupe axiale d'un mode de réalisation préféré de l'invention,
- la figure 3 est une vue extérieure du dispositif de la figure 2 dans sa position d'extension maximale.

Le compresseur de ressort hydraulique comporte un corps ici en trois parties télescopiques. Une première partie est formée par un tronçon tubulaire 1 fermé à l'une de ses extrémités par un fond la et porte à son autre extrémité des moyens 2 connus en eux-mêmes pour l'attachement d'une mâchoire ou d'une coupelle de compression de ressort symbolisé par le trait mixte 3.

A l'intérieur de cette partie tubulaire 1, un manchon 4 est monté à coulissement. Il porte une clavette 5 qui arête en rotation le manchon 4 par rapport à la partie tubulaire 1 en coopérant avec une rainure de clavette 6 réalisée dans la surface cylindrique intérieure de la partie 1.

A l'intérieur de ce manchon intermédiaire 4, le corps comporte une seconde partie tubulaire 7 de plus petit diamètre qui est montée coulissante dans le manchon 4 et arrêtée par rapport à celui-ci au moyen d'une clavette 8. Cette partie 7 est de longueur telle qu'elle possède une extrémité maintenue à l'extérieur de la partie tubulaire extérieure 1, cette extrémité externe étant équipée de moyens 9 connus en eux-mêmes pour l'attachement d'une seconde mâchoire ou coupelle de compression de ressort symbolisé par le trait mixte 10.

La partie tubulaire interne 7 forme le cylindre d'un vérin dont la tige 11 implantée dans le fond la de la partie tubulaire 1, porte à son extrémité opposée à celle de sa fixation au fond la, un piston 12 sur lequel est capable de coulisser le cylindre 7 de manière étanche. La partie 7 tubulaire est fermée à son extrémité interne à la partie 1 par un fond 7a traversé par la tige 11 de manière étanche. La tige 11, le piston 12 et le cylindre 7 définissent entre eux une chambre 13 de volume variable qui peut être connectée par l'intermédiaire d'un conduit 14 ménagé à l'intérieur de la tige 11 débouchant juste sous le piston 12, soit à une source de fluide sous pression 15, soit à un bac 16 de retour de liquide. La sélection des communications est assurée par un distributeur 17 monostable dont la position stable met en communication la chambre 13 avec le bac de récupération 16 au travers d'une restriction 18. L'alimentation de la chambre 13 s'effectue par une action sur le tiroir du distributeur 17 au moyen d'un bouton de manoeuvre 19 agissant à l'encontre d'un ressort de rappel 20. On notera enfin sur cette figure que la paroi la du corps ainsi qu'une paroi terminale du cylindre 7 qui peut être tout simplement un bouchon, sont pourvues d'évents 21 et 22.

Lorsque l'on utilise le dispositif selon l'invention pour déposer un ressort d'amortisseur, on a préalablement placé les mâchoires en prise avec les spires du ressort que l'on souhaite comprimer. L'opérateur agit ensuite sur le compresseur à la main pour éloigner les moyens 2 et 9 l'un de l'autre afin de les placer en face des mâchoires déjà en place. Il a procédé ainsi à l'extension du corps de vérin en chassant le fluide contenu dans la chambre 13 par le canal 14 en direction de la bâche de récupération 16. L'attelage étant réalisé, l'opérateur commande en agissant sur le bouton 19 du distributeur 17 l'alimentation de la chambre 13. Celle-ci augmente de volume, ce qui conduit à la rétraction du corps de compresseur et au rapprochement des mâchoires 3 et 10 qui compriment le ressort à déposer. Lorsque le ressort est suffisamment comprimé pour en permettre la dépose, l'opérateur isole la chambre 13 de l'extérieur en agissant sur une vanne de fermeture 23 qui était préalablement ouverte. La détente du ressort est ensuite obtenue en ouvrant à nouveau la vanne 23 et en ayant relâché le distributeur 17 si bien que le fluide contenu dans la chambre 13 est expulsé de celle-ci par le conduit 14 sous l'effet de l'action du ressort sur les mâchoires 3 et 10 qui tendent à étendre le corps de compresseur, la vitesse de cette détente étant limitée par la présence de la restriction 18 sur le canal d'échappement du fluide. L'extension maximale du corps de vérin est obtenue lorsque la paroi 7a parvient au voisinage du piston 12, sans pour autant masquer le débouché du conduit 14 dans la chambre 13.

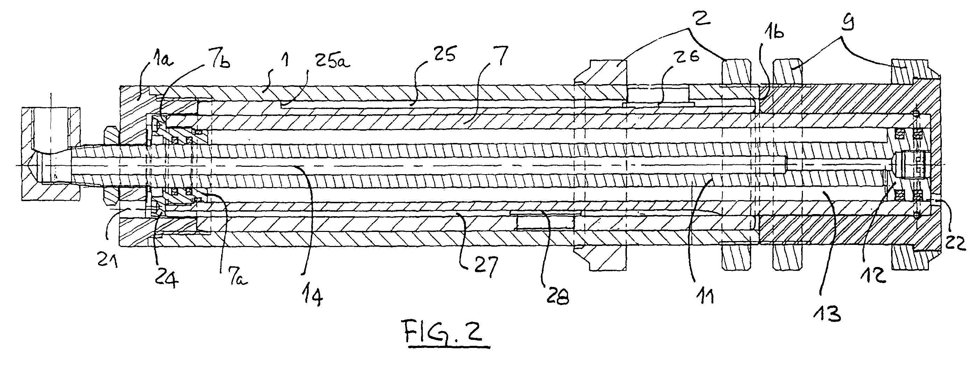

A la figure 2, qui est une vue en coupe axiale d'une réalisation industrielle du compresseur hydraulique selon l'invention, on retrouve certains des éléments déjà décrits avec les mêmes références. A cette figure le compresseur est représenté rétracté. On voit que dans cet état, le piston 12 est logé à l'intérieur de la partie la plus extrême de la seconde pièce tubulaire 7 c'est-à-dire celle qui est au voisinage de son extrémité équipée des moyens 9 d'attachement de la coupelle. Le piston 12 est donc ainsi très largement en saillie par rapport à l'extrémité du corps tubulaire extérieur 1 qui se termine par la face 1b sur laquelle s'appuient lorsque le compresseur est rétracté les moyens 9 d'attachement de la coupelle portés par la partie coulissante 7.

A son extrémité opposée aux moyens 9, la partie tubulaire 7 comporte donc le fond 7a traversé par la tige 11. Ce fond 7a est en fait réalisé par un écrou vissé à l'intérieur de l'extrémité de la partie 7 et prenant appui sur sa face extrême 7b au moyen d'une collerette 24. Dans le cas de figure l'indexation angulaire des pièces 1, 4 et 7 ainsi que le guidage de leur coulissement longitudinal est réalisé de la manière suivante. Le manchon 4 possède une rainure extérieure 25 limitée par une extrémité 25a du côté le plus intérieur du compresseur tandis que cette rainure 25 débouche librement à l'autre extrémité du manchon 7. La pièce tubulaire 1 possède une clavette 26 qui est simplement logée dans un orifice radial formé dans la pièce 1 et qui possède une barrette en saillie de la surface intérieure de cette pièce 1 de manière à pénétrer dans la rainure 25. De la même manière la pièce tubulaire 7 est pourvue d'une rainure de clavette extérieure 27 qui s'étend sur toute la partie de la pièce 7 non couverte par les moyens d'attachement 9 et qui débouche sur la face 7b de cette pièce. Ainsi la collerette 24 de l'écrou 23 formant le fond 7a de la pièce 7 constitue-t-elle un épaulement limitant la rainure 27. Une clavette 28 fait saillie à l'intérieur du manchon 4 et est maintenue dans ce manchon par un emboîtement dans un orifice latéral prévu à cet effet.

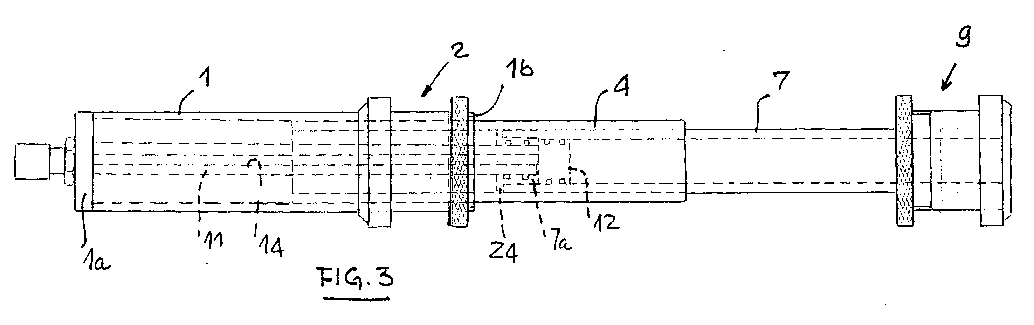

L'extension du compresseur de ressort consiste à purger la chambre 13. Lorsqu'il s'agit de mettre en place le compresseur sur un ressort à comprimer, cette extension se fait à la main. Lorsque la collerette 24 vient en butée contre la clavette 28, le manchon 4 est entraîné par la pièce 7. Ce manchon sort partiellement de la pièce tubulaire extérieure 1 comme cela est illustré à la figure 3 jusqu'à ce que le fond 7a de la pièce 7 vienne au contact du piston 12.

On remarquera à la figure 3 notamment que dans cette position d'extension maximale, la pièce 7 est située complètement à l'extérieur de la pièce 1 et la liaison entre les deux est assurée par le manchon 4 dans lequel la pièce 7 reste largement encastrée du fait de la position de la clavette 28, ce manchon restant lui-même largement engagé à l'intérieur de la pièce 1. Le rôle de l'extrémité 25a de la buté 25 est de venir au contact de la clavette 26 pour éviter une sortie complète du manchon 4 de la pièce 1 si, de manière intempestive, le bouchon 24 formant le fond 7a de la chambre 13 venait à se désolidarisé du tube 7.

Dans le compresseur de l'invention, les efforts de traction sont supportés par la tige 11 tandis que les efforts de flambement sont encaissés par les pièces tubulaires 7, 4 et 1.

## Revendications

1. Compresseur hydraulique de ressort comportant un corps formé par une première pièce tubulaire (1) fermée à l'une de ses extrémités par un fond (1a) dans lequel est implantée l'extrémité d'une tige creuse (11) s'étendant axialement à l'intérieur de la première pièce tubulaire (1) et dont l'autre extrémité est conformée en un piston (12), par une seconde pièce tubulaire (7) avec une extrémité fermée par un fond (7a) traversé par la tige creuse (11) et montée à coulissement étanche sur la tige (11) et le piston (12), définissant entre eux une chambre (13) à volume variable en communication permanente avec le volume intérieur (14) de la tige creuse (11), la première pièce tubulaire (1) comportant sur sa surface extérieure, à son extrémité opposée au fond (1a), des moyens d'attachement (2) pour une coupelle de compression (3), la seconde pièce tubulaire (7) comportant sur sa surface extérieure, à son extrémité opposée à son fond (7a) des moyens d'attachement (9) pour une coupelle de compression (10), la tige creuse (11) étant d'une longueur supérieure à celle de la première pièce (1) tubulaire de sorte que son extrémité en forme de piston (12) est située au-delà des moyens d'attachement (2) portés par la première pièce tubulaire (1), caractérisé en ce que l'extrémité fermée (7a) de la seconde pièce tubulaire (7) est située à l'extérieur des moyens d'attachement (2) de la première pièce tubulaire (1) lorsque la chambre (13) à volume variable est à son volume minimal, en ce qu'un manchon (4) de liaison est monté à coulissement entre la première (1) et la seconde (7) pièces tubulaires respectivement sur les surfaces interne et externe de celles-ci, et en ce qu'un ensemble de rainure et clavette (24, 27, 28) est interposé entre la seconde pièce (7) et le manchon (4) pour guider leur coulissement respectif longitudinal et former des épaulements venant au contact l'un de l'autre pour entraîner axialement le manchon (4) par la seconde pièce (7) lorsque la chambre (13) de volume variable a dépassé une dimension longitudinale déterminée.

2. Compresseur selon la revendication 1, caractérisé en ce que le manchon (4) ou la première pièce (1) comporte une rainure longitudinale (25) dans laquelle est logé un doigt radial (26) porté par la première pièce (1) ou le manchon (4) respectivement.

3. Compresseur selon la revendication 1, caractérisé en ce que le fond (7a) de la seconde pièce tubulaire traversée par la tige (11) est formé par un écrou vissé intérieurement à l'extrémité de cette seconde pièce (7) et possédant une collerette (24) d'appui sur une face (7b) d'extrémité de cette pièce dans laquelle débouche une rainure longitudinale (27) ménagée extérieurement dans la seconde pièce tubulaire (7), ladite collerette (24) constituant l'épaulement susdit d'entraînement d'une clavette radiale (28) portée fixe par le manchon (4) et montée à coulissement dans la rainure (27).

## Claims

1. A hydraulic spring-compressor comprising a body formed by a first tubular part (1) closed at one of its ends by an end wall (1a) in which there is received the end of a hollow rod (11) extending axially inside the first tubular part (1) and whose other end is shaped to form a piston (12), and by a second tubular part (7) having an end closed by an end wall (7a) through which the hollow rod (11) passes, which second tubular part is mounted to slide in sealed manner on the rod (11) and the piston (12), defining therebetween a chamber (13) of variable volume that is continuously in communication with the inside volume (14) of the hollow rod (11), the first tubular part (1) having on its outside surface, at its end remote from the end wall (1a), attachment means (2) for attaching to a compression cup (3), the second tubular part (7) having on its outside surface, at its end remote from its end wall (7a), attachment means (9) for attachment to a compression cup (10), the hollow rod (11) being longer than the first tubular part (1) so that its piston-shaped end (12) is situated beyond the attachment means (2) carried by the first tubular part (1), characterized in that the closed end (7a) of the second tubular part (7) is situated outside the attachment means (2) of the first tubular part (1) when the variable volume chamber (13) is at its minimum volume, in that a link sleeve (4) is slidably mounted between the first and second tubular parts (1, 7) respectively on the inside and outside surfaces thereof, and in that a key and keyway assembly (24, 27, 28) is interposed between the second part (7) and the sleeve (4) to guide respective longitudinal sliding thereof and to form shoulders that come into contact with each other to entrain the sleeve (4) axially by the second part (7) when the variable volume chamber (13) has exceeded a determined longitudinal size.

2. A compressor according to claim 1, characterized in that the sleeve (4) or the first part (1) has a longitudinal groove (25) in which there is received a radial finger (26) carried by the first part (1) or the sleeve (4), respectively.

3. A compressor according to claim 1, characterized in that the end wall (7a) of the second tubular part through which the rod (11) passes is formed by a nut screwed internally to the end of said second part (7) and possessing a collar (24) for bearing against an end face (7b) of said part into which there opens out a longitudinal groove (27) formed in the outside of the second tubular part (7), said collar (24) constituting the above-mentioned shoulder for driving a radial key (28) carried in fixed manner by the sleeve (4) and mounted to slide in the groove (27).

## Patentansprüche

1. Hydraulischer Federspanner mit einem Gehäuse, das aus einem ersten rohrförmigen Teil (1) gebildet ist, das an einem seiner Enden von einem Boden (1a) geschlossen wird, in den das Ende einer Hohlstange (11) eingesetzt wird, die sich axial im Inneren des ersten rohrförmigen Teiles (1) erstreckt und deren anderes Ende als Kolben (12) ausgebildet ist, sowie aus einem zweiten rohrförmigen Teil (7), das ein Ende hat, das von einem von der Hohlstange (11) durchsetzten Boden (7a) geschlossen wird, und auf der Stange (11) und dem Kolben (12) abgedichtet verschiebbar ist, wobei das zweite rohrförmige Teil, die Stange und der Kolben miteinander eine Kammer (13) mit veränderlichem Volumen begrenzen, die in ständiger Verbindung mit dem Innenvolumen (14) der Hohlstange (11) steht, wobei das erste rohrförmige Teil (1) auf seiner Außenseite an seinem dem Boden (1a) entgegengesetzten Ende Befestigungsmittel (2) für einen Spannfederteller (3) hat, wobei das zweite rohrförmige Teil (7) auf seiner Außenseite an seinem dem Boden (7a) entgegengesetzten Ende Befestigungsmittel (9) für einen Spannfederteller (10) hat, und wobei die Hohlstange (11) eine Länge hat, die über der des ersten rohrförmigen Teiles (1) liegt, so daß sich ihr kolbenförmiges Ende (12) jenseits der Befestigungsmittel (2) befindet, die von dem ersten rohrförmigen Teil (1) getragen werden, dadurch **gekennzeichnet**, daß sich das geschlossene Ende (7a) des zweiten rohrförmigen Teiles (7) außerhalb der Befestigungsmittel (2) des ersten rohrförmigen Teiles (1) befindet, wenn die Kammer (13) mit veränderlichem Volumen ihr Minimalvolumen hat, daß eine Verbindungshülse (4) zwischen der Innenfläche des ersten rohrförmigen Teiles (1) und der Außenfläche des zweiten rohrförmigen Teiles (7) verschiebbar geführt ist und daß eine Einheit aus Nut und Keil (24, 27, 28) zwischen dem zweiten Teil (7) und der Hülse (4) angeordnet ist, um deren jeweilige Längsverschiebung zu führen und um Schultern zu bilden, die miteinander in Kontakt kommen, um die Hülse (4) axial durch das zweite Teil (7) mitzunehmen, wenn die Kammer (13) mit veränderlichem Volumen ein vorgegebenes Längsmaß überschritten hat.

2. Federspanner nach Anspruch 1, dadurch **gekennzeichnet**, daß die Hülse (4) oder das erste Teil (1) eine Längsnut (25) hat, in der ein von dem ersten Teil (1) bzw. der Hülse (4) getragener radialer Zapfen (26) angeordnet ist.

3. Federspanner nach Anspruch 1, dadurch **gekennzeichnet**, daß der Boden (7a) des von der Stange (11) durchsetzten, zweiten rohrförmigen Teiles von einer Mutter gebildet ist, die in das Ende dieses zweiten Teiles (7) eingeschraubt ist und einen Bund (24) zur Anlage an einer Endfläche (7b) dieses Teiles hat, in die eine Längsnut (27) mündet, die außen in dem zweiten rohrförmigen Teil (7) ausgebildet ist, wobei der Bund (24) die Schulter zur obengenannten Mitnahme eines radialen Keiles (28) bildet, der von der Hülse (4) ortsfest getragen wird und in der Nut (27) verschiebbar ist.
